# EUROPEAN PATENT APPLICATION

(11) **EP 2 580 953 A1**
(43) Date of publication of application: **17.04.2013**
(21) Application number: 12188258.3
(22) Date of filing: 12.10.2012
(51) Int. Cl.: A01D 34/64

(54) **Undermount implement for a tractor, an installation mechanism and method therefor**

(30) Priority: 14.10.2011 US 201161547361 P
(71) Applicant: RAD Technologies, Thetford Mines QC G6G 5R7 (CA)
(72) Inventor: Champagne, Yannick, Thetford Mines, Québec G6G 2L1 (CA); Gregoire, Jean-François, East-Broughton, Québec G0N 1G0 (CA); Marsolais, Simon, Thetford Mines, Québec G6G 1K7 (CA)
(74) Representative: Wittmann, Günther

(57) **Abstract**

The present relates to an undermount implement (10) for a tractor, to an installation mechanism and to a method therefore. The undermount implement (10) comprises a casing (16), a pair of wheels (12) where each wheel (12) is located on opposite lateral sides of the casing (16), a drive connector for being connected to a drive mechanism of the tractor, the drive connector actuating the implement (10) when the drive mechanism is in function, and an installation mechanism. The present also relates to a method for installing an undermount implement (10) to a tractor comprising engaging a locking device (14) on wheels (12) of the implement (10), rolling the tractor over a casing (16) of the implement (10) so as to locate the implement (10) between front and rear wheels of the tractor, engaging a drive connector of the implement (10) to a drive mechanism of the tractor, and disengaging the locking device

## Description

The present relates to undermount implements, installation mechanisms and method for installing such.

### BACKGROUND

Undermount implements are commonly used with tractors. Such undermount implements are installed under the tractor, between front wheels and rear wheels of the tractor. A drive connector or connection mechanism is used to connect the undermount implement to the tractor so as to actuate the latter.

As tractors are used with various types of implements and to perform multiple different tasks, the undermount implements must be installed when needed, and removed when not in use.

There is thus a need for an improved undermount implement, installation mechanism therefore, and for a new method for installing an undermount implement to a tractor.

### BRIEF DESCRIPTION OF THE DRAWINGS

In the appended drawings:

Figure 1 is a partial perspective view of an undermount implement showing one wheel with an exemplary locking mechanism in a disengaged position;

Figure 2 is a partial perspective view of an undermount implement showing one wheel with an exemplary locking mechanism in an engaged position;

Figure 3 is a top front perspective view of an undermount implement with the present installation mechanism;

Figure 4 is a top rear perspective view of an undermount implement with the present installation mechanism, wherein the locking mechanism is engaged and a tractor is about to roll over a casing of the implement;

Figure 5 is a side elevation view of the present undermount implement on which a tractor is rolling over; and

Figure 6 is a side elevation view of the present undermount implement installed between front wheels and rear wheels of a tractor, prior to disengagement of the locking device.

### DETAILED DESCRIPTION

The foregoing and other features of the present undermount implement and method will become more apparent upon reading of the following non-restrictive description of examples of implementation thereof, given by way of illustration with reference to the accompanying drawings.

The present disclosure relates to undermount implements to be installed under a tractor. The undermount implement could for example consist of a lawnmower, or of any other type of implemented that may be installed under the tractor. Although the present disclosure depicts the undermount implement as an independent component, the present undermount implement could be sold separately, or with a tractor.

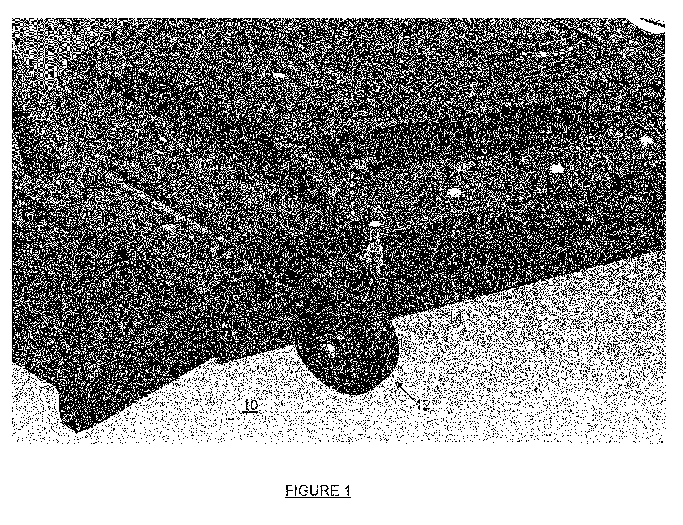

Reference is now made to Figure 1, which is a partial perspective view of an undermount implement 10 showing one wheel 12 with an exemplary locking mechanism 14 in a disengaged position. The undermount implement 10 comprises a casing 16, and at least one pair of wheels 12, of which only one is shown on Figure 1. Depending on the type of implement, one or two pairs of wheels 12 may be used so as to allow proper functioning of the implement when mounted under the tractor (not shown), and further allow installation of the implement 10 under the tractor. Wheels 12 of a pair are located on opposite lateral sides of the casing 16. The implement 10 further comprises a drive connector, as known in the art, for being connected to a drive mechanism (not shown) of the tractor, for actuating the implement when the drive mechanism of the tractor is in function. The present undermount implement 10 further comprises an installation mechanism, for facilitating installation of the undermount implement under the tractor.

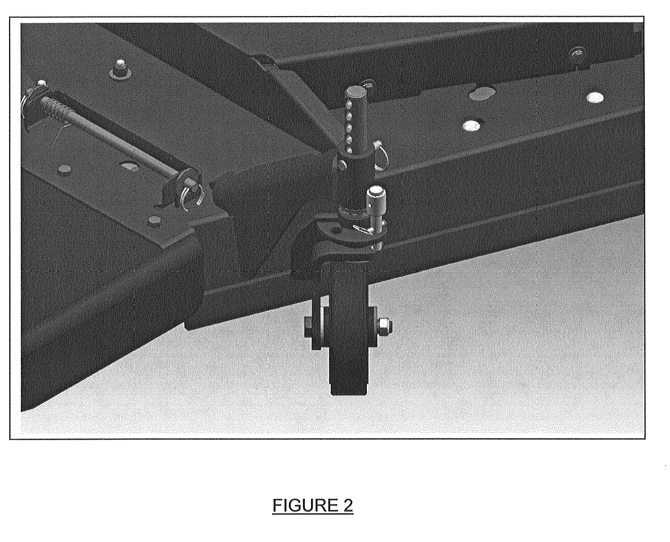

More particularly, in one aspect, the installation mechanism comprises a locking device 14 on at least one pair of wheels 12. The installation mechanism could alternately comprise locking devices 14 on each wheel 14 of the implement 10. An example of locking device 14 is shown on Figure 1 in disengaged position, and in an engaged position in Figure 2. The locking device 14 could consist of any type of mechanism which locks the wheel 12 at diverging or converging angles, so as to prevent movement of the implement 10. The locking mechanism 14 could also for example alternately consist of a brake which can be applied to some of the wheels 12 of the implement, so as to prevent movement of the implement.

Reverting to Figures 1 and 2, the locking mechanism 14 could alternately consist of a locking disk and an engaging pin which when engaged maintains the wheel 12 at a predetermined angle. When engaging pins of each wheel are engaged, the angle formed by the wheels 12 with respect to the implement prevents movement of the implement 10. In a particular aspect, the locking device locks each wheel at an angle of 45° with respect to a front of the implement.

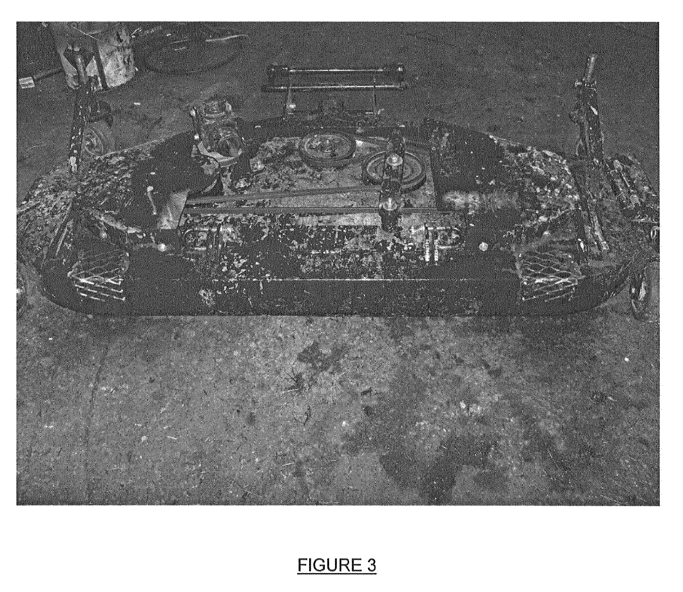

Reference is now made to Figure 3, which is a top front perspective view of an exemplary undermount implement with the present installation mechanism. In addition to the previously discussed locking devices, the present installation mechanism further comprises an anti-skid surface. The anti-skid surface provides adherence to wheels of the tractor when the tractor rolls over the implement during installation. The anti-skid surface may be installed all over the casing 16, or along sides of the implement where the wheels of the tractor may roll over the implement. Various materials may be used as anti-skid surface, including without limitation a meshed metal fabric, pieces of rubber material, mouldings within the casing, etc.

Thus the present installation mechanism may be built directly on the implement at the factory, or installed after sale. For example, in another particular aspect, the present installation mechanism is sold separately from the undermount implement, and may be installed by a manufacturer, a distributor, or even an owner of implements. The installation mechanism is then provided in the form of a kit, to be installed on an implement. The installation mechanism thus comprises a locking device for installation on at least two wheels of the implement for locking each wheel so as to prevent movement of the implement. For example, the locking device could lock each wheel at an angle of 45° with respect to a front of the implement. The locking device could comprise as previously discussed a locking disk and an engaging pin. The installation mechanism could further comprise an anti-skid surface for installation on top of the casing, for providing adherence to wheels of the tractor when the tractor rolls over the implement.

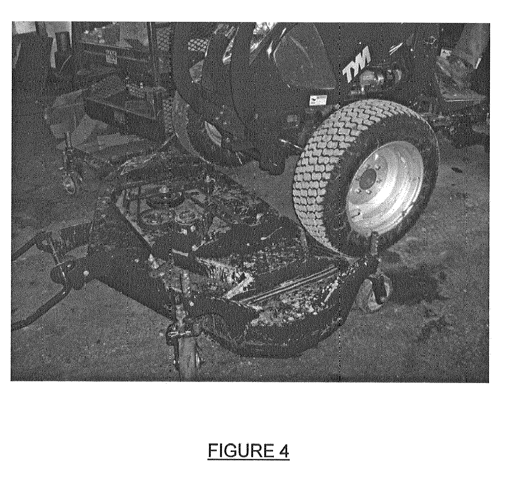

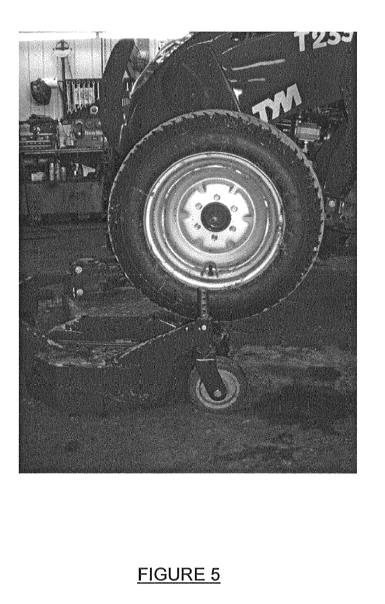

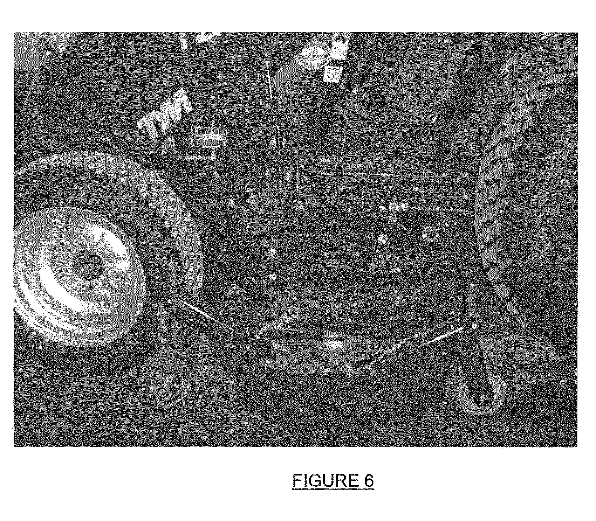

Reference is now made to Figures 4-6, where Figure 4 is a top rear perspective view of an undermount implement with the present installation mechanism, wherein the locking mechanism is engaged and a tractor is about to roll over a casing of the implement; Figure 5 is a side elevation view of the present undermount implement on which a tractor is rolling over; and Figure 6 is a side elevation view of the present undermount implement installed between front wheels and rear wheels of a tractor, prior to disengagement of the locking device. Figures 4-6 thus represent the present method for installing an undermount implement to a tractor. The method comprises engaging a locking device on two wheels of the implement. The method continues with rolling the tractor over the casing 16 of the implement so as to locate the implement between front and rear wheels of the tractor. The method pursues with engaging a drive connector of the implement to a drive mechanism (not shown) of the tractor. Finally, the method also comprises disengaging the locking device, which frees the pair of wheels so as to allow their movement and thus following movement of the tractor.

Although the present undermount implement, installation mechanism and method have been described in the foregoing description by way of illustrative embodiments thereof, these embodiments can be modified at will, within the scope of the appended claims without departing from the spirit and nature of the appended claims.

## Claims

1. An undermount implement for a tractor, the undermount implement comprising:
a casing;
a pair of wheels, each wheel being located on opposite lateral sides of the casing;
a drive connector for being connected to a drive mechanism of the tractor, the drive connector actuating the implement when the drive mechanism is in fonction; and
an installation mechanism.

2. The undermount implement of claim 1, wherein the installation mechanism comprises a locking device on each wheel.

3. The undermount implement of claim 2, wherein the locking device locks each wheel at an angle of 45° with respect a front of the implement.

4. The undermount implement of claim 2, wherein the locking device comprises a locking disk and an engaging pin.

5. The undermount implement of claim 1, further comprising a second pair of wheels, the second pair of wheels being also provided with a locking device.

6. The undermount implement of claim 2, wherein the installation mechanism further comprises an anti-skid surface, the anti-skid surface providing adherence to wheels of the tractor when the tractor rolls over the implement during installation.

7. An installation mechanism for installing on an undermount implement for a tractor, the undermount implement comprising a casing, a pair of wheels, each wheel being located on opposite lateral sides of the casing, a drive connector for being connected to a drive mechanism of the tractor, the drive connector actuating the implement when the drive mechanism is in function, the installation mechanism comprising:
a locking device for installing on each wheel for locking each wheel so as to prevent movement of the implement upon installation of the implement under the tractor.

8. The installation mechanism of claim 7, wherein the locking device locks each wheel at an angle of 45° with respect to a front of the implement.

9. The installation mechanism of claim 7, wherein the locking device comprises a locking disk and an engaging pin.

10. The installation mechanism of claim 7, wherein the installation mechanism further comprises an anti-skid surface to be affixed on top of the casing, the anti-skid surface providing adherence to wheels of the tractor when the tractor rolls over the implement during installation.

11. A method for installing an undermount implement to a tractor, the method comprising:
engaging a locking device on wheels of the implement;
rolling the tractor over a casing of the implement so as to locate the implement between front and rear wheels of the tractor;
engaging a drive connector of the implement to a drive mechanism of the tractor; and
disengaging the locking device.
